(19) Europäisches Patentamt
European Patent Office
Office européen des brevets

(11) **EP 3 433 867 B1**

(12) **EUROPÄISCHE PATENTSCHRIFT**

(45) Veröffentlichungstag und Bekanntmachung des Hinweises auf die Patenterteilung:
**27.05.2020 Patentblatt 2020/22**

(21) Anmeldenummer: **17717156.8**

(22) Anmeldetag: **12.04.2017**

(51) Int Cl.:
*H01H 3/30* *(2006.01)* *H01H 3/36* *(2006.01)*
*H01H 33/40* *(2006.01)* *H01H 33/666* *(2006.01)*
*F16H 19/06* *(2006.01)*

(86) Internationale Anmeldenummer:
**PCT/EP2017/058739**

(87) Internationale Veröffentlichungsnummer:
**WO 2017/194258 (16.11.2017 Gazette 2017/46)**

(54) **KOPPLUNGSGLIED FÜR EIN ELEKTRISCHES SCHALTGERÄT**

COUPLING ELEMENT FOR AN ELECTRICAL SWITCHING DEVICE

ÉLÉMENT DE COUPLAGE POUR UN APPAREIL DE COMMUTATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2016 DE 102016208274**

(43) Veröffentlichungstag der Anmeldung:
**30.01.2019 Patentblatt 2019/05**

(73) Patentinhaber: **Siemens Aktiengesellschaft 80333 München (DE)**

(72) Erfinder:
• **BACHMAIER, Georg**
  **80469 München (DE)**
• **EBELSBERGER, Gerit**
  **81737 München (DE)**
• **GERLICH, Matthias**
  **80636 München (DE)**
• **KOSSE, Sylvio**
  **91052 Erlangen (DE)**
• **ZÖLS, Wolfgang**
  **81249 Lochhausen (DE)**

(56) Entgegenhaltungen:
WO-A1-2016/110430    DE-A1- 19 602 912
US-A1- 2014 260 715

• DATABASE WPI Week 201135 Thomson Scientific, London, GB; AN 2011-F08524 XP002771744, -& CN 201 788 887 U (STATE GRID ELECTRIC POWER RES INST) 6. April 2011 (2011-04-06)
• "ROTARY-TO-AXIAL MOTION CONVERTER FOR VALVE", NTIS TECH NOTES, US DEPARTMENT OF COMMERCE. SPRINGFIELD, VA, US, 1. April 1992 (1992-04-01), Seite 293, XP000306247, ISSN: 0889-8464

**Beschreibung**

Die Erfindung betrifft ein Kopplungsglied für ein elektrisches Schaltgerät nach dem Patentanspruch 1.

In Mittelspannungs- und Hochspannungsleistungsschaltern für Wechselspannung ist es notwendig, dass die elektrischen Kontakte in der Lage sind, innerhalb einer Halbwelle zu öffnen oder zu schließen und dabei einen ausreichend großen Weg zurücklegen, um den notwendigen Isolationsabstand aufzubauen bzw. abzubauen. Ferner muss die Antriebseinheit beim Schließen der Schaltanlage in der Lage sein, im zulässigen Zeitfenster eine geforderte Kontaktkraft aufzubauen und zu halten. Beim Öffnen kann es durch partielles Verschweißen der beiden Elektroden bzw. der beiden Schaltkontakte zu einer erhöhten Trennkraft kommen, die durch die Antriebseinheit bezüglich der Schaltkontakte örtlich getrennt und elektrisch isoliert werden, was relativ hohe Massen und damit eine hohe kinetische Energie zur Folge hat. Dies führt während einer Zustandsänderung des Kontaktes also beim Schließen oder beim Öffnen des Kontaktes wiederum zu einer hohen Überschussenergie, die in der Regel aufwendig gedämpft werden muss, um ein sogenanntes Kontaktprellen zu vermeiden.

Um eine sichere Schaltung zu ermöglichen, wird in der Regel eine wesentlich höhere Antriebsleistung bereitgestellt, als dies prinzipiell für den Schaltvorgang notwendig wäre. Daraus ergibt sich wiederum eine Überschussenergie, die am Ende des Schaltvorgangs kompensiert werden muss. Für diesen Kompensationsvorgang wird wiederum ein zusätzliches Dämpfungselement erforderlich.

Die deutsche Offenlegungsschrift DE 196 02 912 A1 beschreibt einen Antrieb für das bewegliche Kontaktstück eines Vakuumschalters.

Die internationale Veröffentlichung WO 2016/110430 A1, die als Stand der Technik nach Artikel 54(3) EPÜ gilt, zeigt ein Kopplungsglied für ein elektrisches Schaltgerät, wobei das Kopplungsglied einen Wickelkörper und einen drehbar gelagerten Rotationskörper umfasst. Zwei gegenüberliegende flexible Drähte sind vorgesehen, die durch die Rotationsbewegung des Rotationskörpers auf dem Wickelkörper auf bzw. abgewickelt werden.

Die Aufgabe der Erfindung besteht darin, ein Kopplungsglied zur Öffnung oder Schließung eines Schaltkontaktes für ein elektrisches Schaltgerät bereitzustellen, das gegenüber dem Stand der Technik einen niedrigeren Bedarf an mechanischer Energie aufweist, um das Kontaktprellen zu reduzieren.

Die Lösung der Aufgabe besteht in einem Kopplungsglied für ein elektrisches Schaltgerät mit den Merkmalen des Patentanspruches 1.

Das erfindungsgemäße Kopplungsglied weist einen ersten Schaltkontakt zum Öffnen und Schließen eines elektrischen Kontaktes mit einem zweiten Schaltkontakt auf. Dabei umfasst das Kopplungsglied einen stabförmigen, länglichen Wickelkörper, an dessen einem Ende der erste Schaltkontakt angeordnet ist. Ferner umfasst das Kopplungsglied einen Rotationskörper, durch den sich der Wickelkörper erstreckt. Dabei umfasst der Rotationskörper zwei Seiten, von denen eine Seite dem einen Ende des Wicklungskörpers zugewandt ist und die andere Seite dem anderen Ende des Wickelkörpers mit dem Schaltkontakt zugewandt ist. Der Rotationskörper ist dabei drehbar auf dem Wickelkörper gelagert und der Wickelkörper ist dabei entlang seiner Längsachse translatorisch, also linear bewegbar gelagert. Auf beiden Seiten des Rotationskörpers ist dabei jeweils mindestens eine Sehne, die beispielsweise in Form eines Seiles oder Drahtseiles ausgestaltet sein kann, in der Art zwischen dem Rotationskörper und dem Wickelkörper angeordnet, dass über entgegengesetzte Rotationsbewegungen des Rotationskörpers ein Aufwickeln und Abwickeln der Sehnen auf dem Wickelkörper erfolgt, was zu einer translatorischen Bewegung des Wickelkörpers führt. Ferner zeichnet sich der Rotationskörper dadurch aus, dass mindestens zwei Federn in der Art gekoppelt sind, dass in beide Rotationsrichtungen stets eine Federkraft auf den Rotationskörper wirkt, wobei eine Arretierung vorgesehen ist, die in Endlagen der translatorischen Bewegung des Wickelkörpers den Rotationskörper arretieren.

Um die entstehende Überschussenergie nach einer Zustandsänderung des Kopplungsgliedes möglichst gering zu halten, ist es hilfreich, die bewegten Massen zu minimieren und ein möglichst ruckfreies Bewegungsprofil des gesamten Kopplungsgliedes zu gewährleisten. Dies gilt insbesondere für die Startphase und für die Stopphase des Schaltvorganges. Durch die vorliegende Erfindung werden die Massen der Kinematik reduziert, indem auf Torsionsbelastung und Biegebelastung verzichtet wird und entsprechend nur auf Druck und Zug belastet wird. Dies wird insbesondere durch das ruckfreie Bewegungsprofil erzielt, so dass ein Resonator, hier ausgestaltet in Form der beiden Federn, die mit dem Rotationskörper gekoppelt sind, realisiert wird.

In einer weiteren Ausgestaltungsform ist ein Freilauf vorgesehen, der mit dem Rotationskörper gekoppelt ist und der nur eine Rotationsrichtung des Rotationskörpers zulässt. Dieser Freilauf ist beispielsweise in Form eines entsprechenden Kugellagers ausgestaltet, das nur in eine Richtung drehbar ist, und er dient dazu, dass trotz wirkender Federkräfte auf den Rotationskörper in einer Endlage des Wickelkörpers grundsätzlich bei Auslösen eines entsprechenden Signals nur eine Bewegungsrichtung des Rotationskörpers und somit auch nur eine Bewegungsrichtung des Wickelkörpers möglich ist. Hierbei ist es zusätzlich zweckmäßig, dass zwei Freiläufe vorhanden sind, von denen jeweils einer aktiviert ist und in den Endlagen des Wickelkörpers eine Umschaltung der Aktivierung zwischen den beiden Freiläufen erfolgt. Somit ist es sichergestellt, dass jeweils nur eine Bewegungsrichtung des Wickelkörpers und somit des ersten Schaltkontaktes möglich ist.

Die Arretierung, die den Rotationskörper in der Position arretiert, in der eine Endlage der translatorischen Bewegung des Wickelkörpers vorliegt, wird bevorzugt durch einen entsprechenden Aktor gelöst. Dabei kann der Aktor auf ein entsprechendes Signal reagieren, beispielsweise ein Steuersignal, das zum Öffnen oder Schließen des Schaltkontaktes aufruft.

In einer vorteilhaften Ausgestaltungsform wird in der Endlage des Wickelkörpers, in der die Kontakte geschlossen sind, über die Federkraft, die auf den Rotationskörper wirkt, eine Anpresskraft des ersten Kontaktes an den zweiten Kontakt ausgeübt. Hierbei wird der erste Schaltkontakt mit einer Offsetkraft beaufschlagt, mit dessen Hilfe die gewünschte Kontaktkraft der Elektroden bestimmt werden kann.

In der Praxis ist es so, dass durch Reibung beispielsweise bei den Federn oder den Seilen geringe Mengen an Energie in dem Resonatorsystem zwischen Federn und Rotationskörpern verloren geht, so dass nach einer gewissen Anzahl von Öffnungsund Schließvorgängen des Kopplungsgliedes Energie in das System eingebracht werden muss. Diese Energie wird durch ein mechanisches Nachspannen der Federn in das System eingebracht.

In den folgenden Ausführungsbeispielen anhand der folgenden Figuren werden noch weitere Merkmale der Erfindung beschrieben. Dabei handelt es sich um rein exemplarische Ausgestaltungsformen, die keinen Einschnitt in den Schutzbereich darstellen. Dabei zeigen:

Figur 1    ein Kopplungsglied mit einem Rotationskörper und einem Wickelkörper sowie zwei Schaltkontakten, wobei die beiden Schaltkontakte in einer geöffneten Endlage befindlich sind,

Figur 2    ein entsprechendes Kopplungsglied gemäß Figur 1 in einer Mittellage und

Figur 3    ein Kopplungsglied gemäß Figur 1, in dem die Schaltkontakte geschlossen sind.

Nachfolgend wird die Erfindung anhand eines Kopplungsglieds 2 erläutert, das dazu dient, die Schaltkontakte 4, 6 in einer Vakuumschaltröhre zu öffnen und zu schließen. Nichtsdestotrotz kann das erfindungsgemäße Kopplungsglied auch in anderen Schaltgeräten zum Öffnen und Schließen eines elektrischen Kontaktes eingesetzt werden.

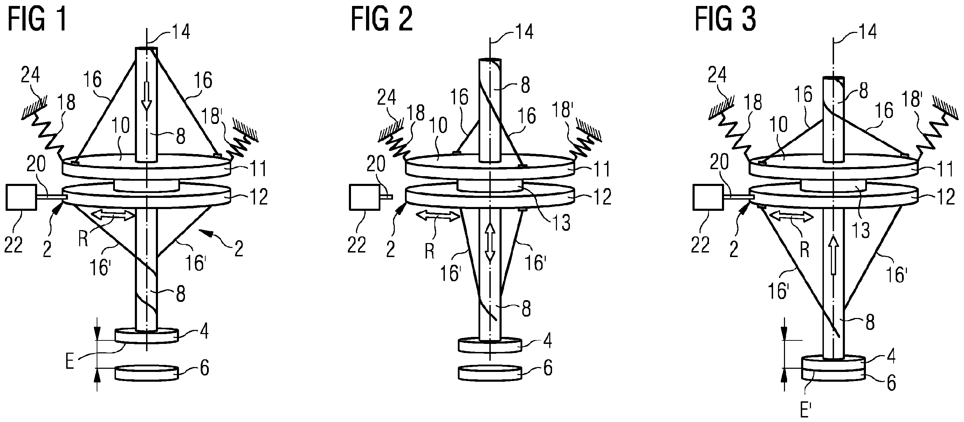

Die Figuren 1 bis 3 zeigen eine Variante eines erfindungsgemäßen Kopplungsgliedes 2. Mit dem Kopplungsglied 2 wird ein Kontaktsystem, bestehend aus den scheibenförmigen Schaltkontakten 4 und 6, betätigt, wobei hierzu der Schaltkontakt 4 relativ zu dem Schaltkontakt 6 bewegt wird. Bei Kontaktierung der beiden Schaltkontakte 4 und 6 wird ein Stromkreis geschlossen und ein Stromfluss über den weiter unten erläuterten elektrisch leitenden stabförmigen Wickelkörper 8 und das Kontaktsystem der Schaltkontakte 4 und 6 bewirkt. Dieser Stromfluss kann durch Öffnen des Kontaktsystems über das Auseinanderbewegen der beiden Schaltkontakte 4 und 6 wieder unterbrochen werden.

Der Schaltkontakt 4 ist an einem unteren Ende des Wickelkörpers 8 befestigt, der im Folgenden auch als Wickelstab bezeichnet wird. Der Wickelkörper 8 ist linear, also translatorisch verschiebbar, wobei er entlang seiner Längsachse geführt wird, dabei aber nicht verdreht werden kann. Auf dem Wickelkörper 8 ist ein Rotationskörper 10 drehbar gelagert, d.h. der Rotationskörper kann auf dem Wickelkörper rotieren. Dazu weist der Rotationskörper 10 eine Bohrung auf, durch die der stabförmige Wickelkörper 8 hindurch ragt. Zwischen dem Wickelkörper 8 und dem Rotationskörper 10 ist dabei ein Lager 13 vorgesehen, so dass die Rotation des Rotationskörpers 10 möglichst reibungsfrei und verlustarm vonstattengeht.

Der Rotationskörper 8 umfasst dabei in diesem Beispiel zwei voneinander beabstandete Scheiben bzw. Seiten 11 und 12. Zwischen diesen beiden Seiten 11 und 12 des Rotationskörpers ist in dieser Ausführungsform schematisch das Lager 13 dargestellt, das veranschaulichen soll, dass der Rotationskörper 10 auf dem Wickelkörper 8 drehbar gelagert ist.

In der Figur 1 ist eine Position des Kopplungsgliedes 2 dargestellt, wobei die Kontakte 4 und 6 in ihrer weitest möglichen Entfernung voneinander geöffnet sind. Diese Entfernung wird mit der Endlage E bezüglich der Stellung des Kontaktes 4 bezeichnet. Die Figur 2 zeigt eine Mittelposition zwischen der Endlage E und der in Figur 3 dargestellten Endlage E', in der die Kontakte 4 und 6 geschlossen sind und ein Stromfluss über die Kontakte erfolgen kann.

Beginnend mit der Position der Endlage E in Figur 1 wird nun der Schließvorgang des Kopplungsgliedes 2 beschrieben. Dabei ist noch auszuführen, dass der Rotationskörper 10 mit - in diesem Beispiel - zwei Federn 18 gekoppelt ist. Die Federn 18 sind auf Zugbelastung ausgelegt und sind dabei mit einem Ende am Rotationskörper 10 befestigt und mit einem anderen Ende an einem Fixpunkt 24 außerhalb des Kopplungsgliedes 2 fixiert. In der Endlage E, in der eine Feder 18 eine stärkere Vorspannung aufweist als die Feder 18', ist eine Arretierung 20 vorgesehen, die wiederum mit einem Aktor 22 in Verbindung steht. Die Arretierung 20 ist in diesem Beispiel sehr schematisch durch einen Stab dargestellt, die Arretierung 20 kann beispielsweise in Form von zwei ineinandergreifenden Zahnkränzen ausgestaltet sein, was hier der besseren Anschaulichkeit halber nicht explizit dargestellt ist.

Ferner umfasst das Kopplungsglied Sehnen 16 bzw. 16', die zwischen dem Rotationskörper 10 und dem Wickelkörper 8, bevorzugt mit einer gewissen Vorspannung versehen, befestigt sind. Die Sehnen 16 sind dabei jeweils am Wickelkörper 8 angebracht und mit einem zweiten Befestigungspunkt möglichst weit außen an den Scheiben 11 und 12 bzw. an den oberen und den unteren Seiten 11 und 12 des Rotationskörpers 10 befestigt. Unter Sehnen werden hierbei insgesamt flexible Gebilde, wie beispielsweise Seile, Drahtseile oder Aramidfasern verstanden, die auf der einen Seite ein hohes Elastizitätsmodul aufweisen, um eine möglichst feste Vorspannung zwischen dem Wickelkörper 8 und dem Rotationskörper 10 zu erzielen.

In dem Beispiel gemäß Figur 1 sind die Sehnen 16' im unteren Bereich zwischen der Seite 12 des Rotationskörpers 10 und dem Schaltkontakt 4 um den Wickelkörper um mehrere Umdrehungen aufgewickelt. Im oberen Bereich des Kopplungsgliedes, also oberhalb der Seite 11 des Rotationskörpers 10, sind die Sehnen 16 in der Position der Endlage E gemäß Figur 1 nicht verdreht. Öffnet man die Arretierung 20, beispielsweise hervorgerufen durch ein Signal, das an den Aktor 22 weitergeleitet wird, so wird durch die Vorspannung der Federn 18 und 18', die insgesamt so ausgestaltet sind, dass sich ein Resonator ergibt, eine Drehbewegung des Rotationskörpers erzeugt, durch die sich die Sehnen 16' im unteren Bereich des Wickelkörpers 8 abrollen und im Gegenzug dazu die Sehnen 16 im oberen Bereich, oberhalb des Rotationskörpers 10, auf dem Wickelkörper aufdrehen. Diese Position ist in Figur 2 dargestellt. In der Position gemäß Figur 2 sind die Federn 18 und 18' auch im Wesentlichen in einer Gleichgewichtslage, wobei auch hier eine Vorspannung der Federn 18 und 18' vorliegt. Diese Gleichgewichtslage gemäß Figur 2 wird aufgrund der Wirkung der beiden Federn als Resonator überwunden und stellt sich gemäß Figur 3 die Position der Endlage E' ein, bei der die beiden Schaltkontakte 4 und 6 geschlossen sind.

Dabei ist das System bezüglich der Vorspannungen der einzelnen Federn 18 und 18' so ausgestaltet, dass nicht nur ein Kontakt zwischen den Kontakten 4 und 6 hergestellt ist, sondern auch eine Offsetkraft, also eine zusätzlich Anpresskraft durch den Wickelkörper 8 und den Schaltkontakt 4 auf den Schaltkontakt 6 wirkt. Bei Erreichen der Endlage E' greift die Arretierung 20, wiederum ausgelöst durch den Aktor 22 in den Rotationskörper 10 ein, so dass die Position des Rotationskörpers 10 gehalten wird.

Bei dem Bewegungsablauf, der zwischen den Figuren 1 und 3 dargestellt ist, wird gezeigt, wie durch die Rotation des Rotationskörpers 10 eine Rotationsbewegung durch Aufwickeln der Sehnen 16 in eine translatorische Bewegung des Wickelkörpers 8 und somit auch des Schaltkontaktes 4 umgewandelt wird. Die translatorische bzw. auch lineare Bewegung des Wickelkörpers 8 kann in beide Richtungen erfolgen. Der hier beschriebene Schließvorgang kann reversibel ausgehend von der Figur 3 über die Position der Figur 2 zurück zur Figur 1 beschrieben werden, wobei eine translatorische Bewegung des Wickelkörpers 8 entlang seiner Längsachse 14 in Richtung der Endlage E vollzogen wird.

Da das Federpaar 18 und 18' als Resonator wirkt, kann diese Bewegung sehr häufig ohne große Reibungsverluste vonstattengehen. Die Reibungsverluste sind deshalb sehr gering, da die Reibung, die über die Sehnen 16 und 16' übertragen werden, ebenfalls gering ist und eine möglichst gute Lagerung des Rotationskörpers bezüglich des Wickelkörpers 8 erfolgt.

Die Drehbewegung des Rotationskörpers 10 ist in der Art ausgestaltet, dass der Rotationskörper bei einem Öffnungs- und einem Schließvorgang jeweils eine Drehung von etwa 90° in jede Richtung vollzieht. Dabei ist die Schaltzeit, also die Zeit, die das Kopplungsglied benötigt, von der Endlage E' in die Endlage E und umgekehrt zu gelangen, durch die Steifigkeit der verwendeten Federn 18 und durch die Trägheit, also der Masse des Rotationskörpers 10, der auch als Schwungrad fungiert, abhängig. Die Winkelgeschwindigkeit $\Omega$ des Rotationskörpers 10 ist dabei direkt proportional zu der Wurzel aus dem Verhältnis von Federsteifigkeit, also der Federkonstante K und der Masse m des Rotationskörpers 10, exemplarisch ausgedrückt durch die Gleichung

$$\Omega \sim (K/m)^{0,5}.$$

Dabei ist die Energie des Rotationskörpers so eingestellt, dass sich das gewünschte $\Omega$, also die gewünschte Winkelgeschwindigkeit und die gewünschte Schaltzeit für den jeweiligen Schaltvorgang ergibt, wobei ca. 95 % der Gesamtenergie des Systems in den Schaltvorgang einfließt wird. Durch das sehr verlustarme arbeitende beschriebene Schaltsystem bzw. Kopplungsglied geht dabei in einem exemplarischen Schaltvorgang ca. 1,5 J in dem System an Energie verloren. Bei einem konventionalen Schaltvorgang mit einem konventionellen Antrieb geht bei einer selben Leistung und bei einer vergleichbaren Größe des Kopplungsgliedes das 20- bis 30-fache an Energie pro Schaltvorgang verloren. Das bedeutet, dass diese Energie beim Auftreffen der beiden Schaltkontakte 4 und 6 verloren gehen, was dazu führt, dass diese Energie die Schaltkontakte in einem sogenannten Prellvorgang mehrfach im mikroskopischen Bereich voneinander trennt und wieder zusammenbringt, ähnlich wie dies ein Hammer tut, der auf einen Amboss geschlagen wird. Dieser Prellvorgang ist beim Schalten der Hochspannungsanlage äußerst unerwünscht, da durch ihn kein gleichmäßiger und schneller Kontaktaufbau vonstattengehen kann. Durch das energetisch verlustarm arbeitende Kopplungsglied gemäß der Figuren 1 bis 3 wird dieser Prellvorgang auf ein Minimum reduziert.

Da das System des Kopplungsgliedes 2 derart verlustarm schaltet, ist es möglich, bei einer entsprechenden Vorspannung der Federn 18 und 18' eine Vielzahl von Schaltvorgängen zu realisieren. Dabei ist das System bevorzugt in der Art eingestellt, dass so viele Schaltvorgänge durchgeführt werden, wie dies üblicherweise zwischen zwei ohnehin stattfindenden Wartungsintervallen der Schaltanlage anfallen würden. Somit kann bei einer routinemäßigen Wartung durch ein mechanisches Aufziehen, also Vorspannen der Federn 18 und 18' durch Überdrehen des Rotationskörpers 8 (Schwungrades) erfolgen. Das Aufziehen kann beispielsweise manuell entsprechend einer mechanischen Uhr oder mit Hilfe eines Elektromotors erfolgen.

Des Weiteren sind noch im Bereich des rein schematisch dargestellten Lagers 13 zwei Freiläufe angeordnet, deren Funktion darin besteht, eine Rotationsbewegung des Rotationskörpers 10 lediglich in eine Richtung zuzulassen, nämlich in die Richtung, die bezüglich der jeweiligen Endlage E oder E' die einzige gewünschte Richtung ist. Diese Freiläufe, die hier nicht explizit dargestellt sind, wirken Hand in Hand mit der Arretierung 20, so dass bei dem Anlegen der jeweiligen Arretierung 20 beispielsweise in der Endlage E nur in den Freilauf geschaltet wird, der durch die entsprechende Rotation eine translatorische Bewegung entlang der Achse 14 des Wickelkörpers 8 in Richtung der unteren Endlage, also der geschlossenen Endlage E', zulässt. Bei der Endlage E' gemäß Figur 3 wird wiederum ausschließlich die Rotationsbewegung in die Gegenrichtung und somit eine translatorische Bewegung nach oben in Richtung der Endlage E zugelassen. Beim Freilauf handelt es sich um ein Kugellager, das lediglich eine Drehrichtung zulässt und die entgegensetzte Drehrichtung sperrt.

## Patentansprüche

1. Kopplungsglied für ein elektrisches Schaltgerät, wobei das Kopplungsglied (2) einen ersten Schaltkontakt (4) zum Öffnen und Schließen eines elektrischen Kontakts mit einem zweiten Schaltkontakt (6) umfasst, **dadurch gekennzeichnet, dass**

   - das Kopplungsglied (2) einen stabförmigen Wickelkörper (8) umfasst und an dessen einem Ende der erste Schaltkontakt (4) angeordnet ist;
   - das Kopplungsglied (2) einen Rotationskörper (10) umfasst, durch den sich der Wickelkörper (8) erstreckt,
   - wobei der Rotationskörper (10) zwei Seiten (11,12) umfasst, von denen eine (11) dem einen Ende des Wickelkörpers und die andere (12) dem anderen Ende des Wickelkörpers zugewandt ist,
   - der Rotationskörper (10) drehbar auf dem Wickelkörper (8) gelagert ist und der Wickelkörper (8) entlang seiner Längsachse (14) translatorisch bewegbar gelagert ist;
   - auf beiden Seiten (11,12) des Rotationskörpers (10) jeweils mindestens eine Sehne (16) derart zwischen dem Rotationskörper (10) und dem Wickelkörper (8) angeordnet ist, dass über entgegengesetzte Rotationsbewegungen des Rotationskörpers (10) ein Aufwickeln und Abwickeln der Sehne (16) auf dem Wickelkörper (8) erfolgt was zu einer translatorischen Bewegung des Wickelkörpers (8) führt und
   - der Rotationskörper (10) mit mindestens zwei Federn (18,18') in der Art gekoppelt ist, dass in beide Rotationsrichtungen (R,R') stets eine Federkraft auf den Rotationskörper (10) wirkt, wobei
   - eine Arretierung (20) vorgesehen ist, die in Endlagen (E,E') der translatorischen Bewegung des Wickelkörpers (8) den Rotationskörper (10) arretiert.

2. Kopplungsglied nach Anspruch 1, **dadurch gekennzeichnet, dass** ein Freilauf vorhanden ist, der mit dem Rotationskörper (10) gekoppelt ist und der nur eine Rotationsrichtung des Rotationskörpers (10) zulässt.

3. Kopplungsglied nach Anspruch 2, **dadurch gekennzeichnet, dass** zwei in Gegenrichtung frei laufende Freiläufe vorgesehen sind, von dem jeweils einer aktiviert ist und in den Endlagen (E,E') des Wickelkörpers eine Umschaltung der Aktivierung zwischen den beiden Freiläufen erfolgt.

4. Kopplungsglied nach einem der vorhergehenden Ansprüchen, **dadurch gekennzeichnet, dass** eine Lösung der Arretierung (20) durch einen Aktor (22) erfolgt.

5. Kopplungsglied nach einem der vorhergehenden Ansprüche, **dadurch gekennzeichnet, dass** in der Endlage (E'), in der die Kontakte (4,6) geschlossen sind, über die Federkraft, die auf den Rotationskörper (10) wirkt, eine Anpresskraft des ersten Kontaktes (4) an den zweiten Kontakt (6) erfolgt.

6. Kopplungsglied nach einem der vorhergehenden Ansprüche, **dadurch gekennzeichnet, dass** ein Ausgleich an Energieverlust im Kopplungsglied durch mechanisches Nachspannen der Federn (18) erfolgt.

7. Kopplungsglied nach einem der vorhergehenden Ansprüche, **dadurch gekennzeichnet, dass** die mindestens zwei Federn (18) zu jeder Positionierung des Rotationskörpers (10) eine Vorspannung aufweisen.

## Claims

1. Coupling element for an electrical switching device, wherein the coupling element (2) comprises a first switching contact (4) for opening and closing an electrical contact having a second switching contact (6), **characterized in that:**

- the coupling element (2) comprises a rod-shaped winding body (8), and the first switching contact (4) is arranged at one end of said winding body;

- the coupling element (2) comprises a rotating body (10), through which the winding body (8) extends,

- wherein the rotating body (10) comprises two sides (11, 12), of which one side (11) faces one end of the winding body and the other side (12) faces the other end of the winding body,

- the rotating body (10) is mounted rotatably on the winding body (8), and the winding body (8) is mounted so as to be capable of translational movement along its longitudinal axis (14);

- at least one cord (16) is arranged on each of the two sides (11, 12) of the rotating body (10) between the rotating body (10) and the winding body (8) in such a way that winding and unwinding of the cord (16) on the winding body (8) takes place by virtue of opposite rotational movements of the rotating body (10), which results in a translational movement of the winding body (8), and

- the rotating body (10) is coupled to at least two springs (18, 18') in such a way that a spring force always acts on the rotating body (10) in both directions of rotation (R, R'), wherein

- a lock (20) is provided which locks the rotating body (10) in end positions (E, E') of the translational movement of the winding body (8).

**2.** Coupling element according to Claim 1, **characterized in that** a freewheel is provided which is coupled to the rotating body (10) and which permits only one direction of rotation of the rotating body (10).

**3.** Coupling element according to Claim 2, **characterized in that** two freewheels operating in the opposite direction are provided, of which in each case one is activated, and switchover of the activation between the two freewheels takes place in the end positions (E, E') of the winding body.

**4.** Coupling element according to one of the preceding claims, **characterized in that** release of the lock (20) takes place by means of an actuator (22).

**5.** Coupling element according to one of the preceding claims, **characterized in that**, in the end position (E') in which the contacts (4, 6) are closed, a contact-pressure force of the first contact (4) against the second contact (6) takes place by virtue of the spring force acting on the rotating body (10).

**6.** Coupling element according to one of the preceding claims, **characterized in that** compensation of energy loss in the coupling element takes place by virtue of mechanical tensioning of the springs (18).

**7.** Coupling element according to one of the preceding claims, **characterized in that** the at least two springs (18) have a pretension for each positioning of the rotating body (10) .

## Revendications

**1.** Elément de couplage pour un appareil électrique de coupure, l'élément (2) de couplage comprenant un premier contact (4) de coupure pour ouvrir et fermer un contact électrique avec un deuxième contact (6) de coupure, **caractérisé en ce que**

- l'élément (2) de couplage comprend un mandrin (8) en forme de barreau et le premier contact (4) de coupure est disposé à l'une de ses extrémités ;

- l'élément (2) de couplage comprend une pièce (10) de rotation, à travers laquelle passe le mandrin (8),

- dans lequel la pièce (10) de rotation comprend deux côtés (11, 12), dont l'un (11) est tourné vers une extrémité du mandrin et l'autre (12) vers l'autre extrémité du mandrin,

- la pièce (10) de rotation est montée tournante sur le mandrin (8) et le mandrin est monté mobile en translation suivant son axe (14) longitudinal ;

- des deux côtés (11, 12) de la pièce (10) de rotation est montée, respectivement, au moins une corde (16) entre la pièce (10) de rotation et le mandrin (8), de manière à produire, par des mouvements de rotation de sens contraire de la pièce (10) de rotation, un enroulement et un déroulement de la corde (16) sur le mandrin (8), ce qui donne un mouvement de translation du mandrin (8) et

- la pièce (10) de rotation est couplée à au moins deux ressorts (18, 18'), de manière à ce qu'une force de ressort agisse toujours sur la pièce (10) de rotation, dans les deux sens (R, R') de rotation, dans lequel

- il est prévu un arrêt (20), qui arrête la pièce (10) de rotation en des positions (E, E') de fin de course du déplacement en translation du mandrin (8).

**2.** Elément de couplage suivant la revendication 1, **caractérisé en ce qu'**il y a une roue libre, qui est couplée à la pièce (10) de rotation et qui n'autorise la pièce (10) de rotation à tourner que dans un sens.

**3.** Elément de couplage suivant la revendication 2, **caractérisé en ce qu'**il est prévu deux roues libres en sens contraire, dont l'une, respectivement, est activée et il se produit, dans les positions (E, E') de fin de course du mandrin, une inversion de l'activation entre les deux roues libres.

**4.** Elément de couplage suivant l'une des revendications précédentes, **caractérisé en ce qu'**un desserrage de l'arrêt (20) est produit par un actionneur (22).

**5.** Elément de couplage suivant l'une des revendications précédentes, **caractérisé en ce que**, dans la position (E') de fin de course, dans laquelle les contacts (4,6) sont fermés, il se produit, par la force de ressort, qui s'applique à la pièce (10) de rotation, une force de pression du premier contact (4) sur le deuxième contact (6).

**6.** Elément de couplage suivant l'une des revendications précédentes, **caractérisé en ce qu'**une compensation de perte d'énergie dans l'élément de couplage a lieu par rebandage mécanique des ressorts (18).

**7.** Elément de couplage suivant l'une des revendications précédentes, **caractérisé en ce que** les au moins deux ressorts (18) ont une précontrainte à chaque mise en position de la pièce (10) de rotation.

# FIG 1

14

24

16    16

18

18'

10    8

20    11

22    12

2

R

16'    16'    2

8

4

E

6

# FIG 2

14

8

24    16    16    18'

18    10

20    11

22    12

2    13

R

16'    16'

8

4

6

# FIG 3

14

24    8

18    16    16    18'

10

20    11

22    12

2    13

R

16'    16'

8

4

6

E'

EP 3 433 867 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19602912 A1
- WO 2016110430 A1